(19) Europäisches Patentamt
European Patent Office
Office européen des brevets

(11) Publication number: 0 009 817
B1

# (12) EUROPEAN PATENT SPECIFICATION

(45) Date of publication of patent specification: 28.09.83

(51) Int. Cl.³: C 08 J 3/20, C 08 L 23/00

(21) Application number: 79103809.4

(22) Date of filing: 05.10.79

## (54) Process for preparing homogeneous compositions of olefinic polymers in the form of granules and of various additives.

(30) Priority: 05.10.78 IT 2844878

(43) Date of publication of application:
16.04.80 Bulletin 80/8

(45) Publication of the grant of the patent:
28.09.83 Bulletin 83/39

(84) Designated Contracting States:
BE DE FR GB NL

(56) References cited:
CA - A - 1 021 091
FR - A - 2 376 176

CHEMICAL ABSTRACTS, vol. 87, no. 6, 8th August 1977, page 33, no. 40279a Columbus, Ohio, U.S.A.

(73) Proprietor: Montedison S.p.A.
Patents & Licensing Dept. Foro Buonaparte, 31
P.O. Box 10528
I-20121 Milan (IT)

(72) Inventor: Camprincoli, Pierpaolo, Dr.
73, Via C. Guglielmi
Terni (IT)
Inventor: Capponi, Pietro
25, Via Filippo Turati
Terni (IT)
Inventor: Spagnoli, Leonardo
12, Via del Lanificio
Terni (IT)

(74) Representative: Zumstein, Fritz sen., Dr. et al,
Dr. F. Zumstein sen. Dr. E. Assmann Dr. R. Koenigsberger Dipl.-Ing. F. Klingseisen Dr. F. Zumstein jun. Bräuhausstrasse 4
D-8000 München 2 (DE)

EP 0 009 817 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Process for preparing homogeneous compositions of olefinic polymers in the form of granules and of various additives

This invention relates to compositions containing additives, obtained from polyolefins in the form of freeflowing particles (flakes) and to the process for preparing same.

For preparing manufactured articles of polyolefins, pigmented, stabilized and generally containing compounds modifying the characteristics of the articles, the Applicant and others have suggested processes based on the admixture of the polyolefins in powder with the additives, and on the successive transformation into granules by extrusion in the molten state.

The granulated products are then utilized for being transformed into textile fibres, films, fibrillated films, fibrils, spun-bonded, by extrusion, and into plastic articles by extrusion, blow molding, coating, thermoforming-molding, calendering, roto-molding and the like.

The processes based on the mixing of powdered polyolefins with additives and on the successive granulation involve complex technological operations, which are necessary when working with very fine powders.

The polyolefins, however, can be prepared also in the form of granules, the so-called flakes, according to what is described by C. W. Hock in Polymer Sci., *4*, 3055 (1966), and in several patents in the name of the Applicant and of others.

Such polymeric products are obtained directly in polymerization processes in suspension and consist of particles having an average size larger than 150 micrometres.

These polyolefinic flakes can be directly transformed into additive-containing articles, after a simple mixing of the polyolefins with the additives, and excluding the granulation step, as this would cause non-homogeneous distributions of the additives in the polyolefins and difficulties in the transformation operations.

According to French Patent 2 376 176 the mixing is carried out in the presence of a lubricating agent such as glycerol or diethylene glycol at a temperature near the melting point of the polymer.

The Applicant has now found a process—which is the object of the present invention—for preparing additioned polyolefinic flakes, which consists in mixing the polyolefins in flakes with the additives, in the presence of a small amount of a third component (a mixing agent) having the function of promoting a homogeneous distribution of the additives on the flakes' surfaces, binding then to the latter and making possible a direct transformation into manufactured articles, without any granulation step.

The mixing agents suited to the use according to this invention are selected from the class consisting of paraffinic compounds, having a linear or branched chain, either liquid or solid, containing up to 500 carbon atoms, in particular vaseline oil, paraffin waxes, oligomers of propylene and ethylene, low molecular weight polypropylenes, which are employed as such or in solution in hydrocarbon solvents.

It has been also found—and this is another feature of the present invention—that the paraffin compounds may contain one or more polar groups. In such case the affinity between the mixing agent and the polar groups of the additives improves.

Paraffinic compounds containing polar groups particularly useful according to this invention are the ones comprised in the following general formula:

$$R—X$$

wherein R is a linear or branched alkyl radical, containing 12 to 30, preferably 12 to 18, carbon atoms, X may be:

a) —OH

b) —COOH or corresponding salts of alkali metals

c) —NR′—R″ where R′ and R″, which may be the same or different are hydrogen or alkyl having 1 to 12 carbon atoms

d) $—O(CH_2CH_2O)_m—H$, $—O[CH(CH_3)CH_2O]_m—H$ where m=1—50 preferably 4—20, especially 5—20

e) 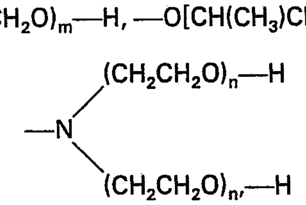 , 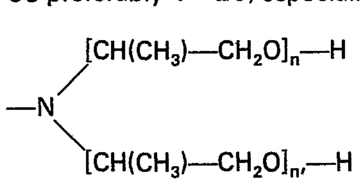

where n and n′, which may be the same or different, are comprised between 0 and 50, at least one being different from 0

f) —OCOR‴ where R‴ is an alkyl containing hydroxyl groups, in particular it may be a radical deriving from polyols such as ethylene glycol, glycerine, pentaerythritol.

The compounds utilized as mixing agents according to this invention are employed in amounts ranging from 0.01% to 5% by weight referred to the total compounded polymer.

The additives employable according to the present invention include stabilizers, opacifiers, organic and inorganic pigments, blowing agents, lubricants, antistatic agents, dyeing modifiers and hydrophilising agents either alone or in admixture with one another.

As polyolefins in flakes use is made of the olefinic crystalline polymers, prepared by means of stereospecific catalysts, more particularly the propylene polymers having prevailing isotactic macromolecules and the ethylene-propylene crystalline copolymers prevailing containing propylene, either of the random type or in blocks.

A particularly advantageous method of embodying this invention consists in preparing a concentrated mix of granular polymer, with a relatively high content of additive and of mixing agent, which is then mixed with the polymer as such in a suitable amount, in order to obtain the desired polymeric composition.

The following examples illustrate this invention.

Example 1

| | |
|---|---|
| —Polypropylene in flakes | 1.780 kg |
| —vaseline oil | 0.020 kg |
| —"Graftolo" Yellow RCL (C.I. second edition (1956), Pigment Yellow 83) | 0.200 kg |

were introduced into a 10-liter Henschell mixer. Mixing was carried out at 25°C for 5 minutes. The polypropylene in flakes utilized exhibited a melt index =12, a residue to the extraction with heptane=97.5%, an ash content=75 ppm, and apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was fully homogeneous, as resulted from the absence of any crumbs and deposits on the mixer walls.

Photographic enlargements of the mix revealed a uniform distribution of the pigment on the surface of the polymer granules, unlike what occurs with a polymer mix not containing vaseline oil.

0.030 kg of concentrated mix were diluted by mixing in a 10-liter quick mixer of the Henschell-type, with 2.970 kg of polypropylene flakes, to obtain a pigment concentration of 0.1%.

To check the influence exerted by the mixing agent on the homogeneous distribution of the pigment and on its intensity, as well as to check the influence thereof on the colour stability to heat degradation, small plates were prepared with the dilute mix. The 1-mm thick plates were prepared in a Carver press by heating for 15 minutes to temperatures of 200°C, 240°C, 260°C, 280°C.

In all the samples the pigment turned out to be perfectly stable to heat degradation.

Example 2

| | |
|---|---|
| —Polypropylene in flakes | 1.780 kg |
| —vaseline oil | 0.020 kg |
| —thermostable Red BRA (C.I., second edition (1956), Pigment Red 144) | 0.200 kg |

were introduced into a 10-liter mixer, Henschell-type.

Mixing was conducted at 25°C for 5 minutes. The polypropylene in flakes utilized exhibited a melt index=12, a residue to the extraction with heptane=97.5%, ashes=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was fully homogeneous, as was proved by the absence of crumbs and deposits on the mixer walls. Photographic enlargements of the mix showed a uniform distribution of the pigment on the surface of the polymer granules, unlike what happens with a polymer mix not containing vaseline oil, in which the dyeing yield is by far lower. 0.030 kg of concentrated mix were diluted by mixing in a 10-liter quick mixer of the Henschell-type, with 2.970 kg of polypropylene flakes, to obtain a pigment concentration of 0.1%.

To check the influence exerted by the mixing agent on the homogeneous distribution of the pigment and on its intensity, as well as to check the influence thereof on the colour stability to thermal degradation, small plates were prepared with the dilute mix. The 1-mm thick plates were prepared in a Carver press, by heating for 15 minutes to temperatures of 200°C, 240°C, 260°C, 280°C.

In all the samples the pigment proved to be thoroughly stable to heat decomposition.

The dilute mix was directly fed to a melt spinning device. Spinning and successive stretching were carried out under the following working conditions:

| | |
|---|---|
| —temperature of the head | 230°C |
| —temperature of the spinneret | 230°C |
| —temperature of the screw | 240°C |
| —spinneret type (number of holes/diameter/height) | 40/0.8/4 |
| —max. pressure | 26 kg/cm$^2$ |
| —winding speed | 400 m/min. |
| —stretching temperature | 130°C |
| —stretching medium | vapour |
| —stretching ratio | 1:3.3 |

The resulting fibres exhibited a uniform pigmentation and the following characteristics:

| | |
|---|---|
| —count | 17 dtex |
| —tenacity | 3.3 g/dtex |
| —elongation | 62% |

Example 3

Into a 10-liter mixer of the Henschell-type, the following products were introduced:

| | |
|---|---|
| —polypropylene in flakes | 1.340 kg |
| —vaseline oil | 0.060 kg |
| —"Graftolo" oxide red EOR | 0.600 kg |

Mixing was carried out at 25°C for 5 minutes. The utilized polypropylene in flakes exhibited a melt index=12, a residue to the extraction with heptane=97.5%, ashes=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 % |

The concentrated mix was quite homogeneous, as proved by the absence of crumbs and deposits on the mixer walls. Photographic enlargements of the mix revealed a uniform distribution of the pigment on the surface of the polymer granules unlike what happens with the polymer mix not containing vaseline oil, in which the dyeing yield is by far lower.

0.010 kg of concentrated mix were diluted, by mixing in a 10-liter quick mixer Henschell-type, with 2.990 kg of polypropylene flakes, to obtain a pigment concentration of 0.1%. To check the influence of the mixing agent on the homogeneous distribution of the pigment and on its intensity, as well as to check the influence thereof on the colour stability to thermal degradation, small plates were prepared with the dilute mix. The 1-mm thick plates were prepared in a Carver press, by heating for 15 minutes to temperatures of 200°C, 240°C, 260°C, 280°C.

In all the samples the pigments were fully stable to heat degradation.

Example 4

| | |
|---|---|
| —Polypropylene in flakes | 1.780 kg |
| —paraffin, melting point=51—53°C | 0.020 kg |
| —Thermostable Red BRA (C.I., second addition (1956), Pigment Red 144) | 0.200 kg |

were introduced into a 10-liter mixer, Henschell-type. Mixing was conducted at 25°C for 5 minutes.

The polypropylene in flakes employed exhibited a melt index=12, a residue to the extraction with heptane=97.5%, an ash content=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 |

The concentrated mix was completely homogeneous, as resulted from the absence of crumbs and deposits on the mixer walls, and from the uniform pigment coating on the polypropylene flakes.

Example 5

| | |
|---|---|
| —Polypropylene in flakes | 1.780 kg |
| —vaseline oil | 0.020 kg |
| —pentaerythritoltetra-3-(3,5-di-tert . butyl-4-hydroxyphenyl)-propionate | 0.200 kg |

were introduced into a 10-liter mixer of the Henschell-type. Mixing was carried out at 25°C for 5 minutes.

The polypropylene in flakes utilized exhibited a melt index=12, a residue to the extraction with heptane=97.5%, an ash content=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 % |

The concentrated mix is fully homogeneous, as was proved by the absence of crumbs and deposits on the mixer walls. Photographic enlargements of the mix revealed a uniform distribution of the additive on the surfaces of the polymer granules unlike what happened with the polymer mix not containing vaseline oil.

Example 6

| | |
|---|---|
| —Polypropylene in flakes | 1.780 kg |
| —vaseline oil | 0.020 kg |
| —2-tert . butyl-2[4-hydroxy-3,3,5,5-tetramethylbenzyl]malonate of 2,2,6,6-tetramethyl-4-piperidyl | 0.200 kg |

were introduced into a 10-liter mixer, Heschell-type. Mixing was conducted at 25°C for 5 minutes.

The polypropylene in flakes employed exhibited a melt index=12, a residue to the extraction with heptane=97.5%, an ash content=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 % |

The concentrated mix was completely homogeneous, as resulted from the absence of crumbs and deposits on the mixer walls.

From photographic enlargements of the mix it was possible to notice a uniform distribution of the additive on the surfaces of the polymer granules unlike what happens with a polymer mix not containing vaseline oil.

Example 7

| | |
|---|---|
| —Polypropylene in flakes | 1.780 kg |
| —N,N-bis-(polyoxyethylene)-n . dodecylamine (with about 20 units ($CH_2CH_2O$)) | 0.020 kg |
| —"Graftolo" Yellow RCL (C.I., second edition (1956), Pigment Yellow 83) | 0.200 kg |

were introduced into a 10-liter mixer, Henschell-type. Mixing was conducted for 5 minutes at 25°C.

The employed polypropylene in flakes exhibited a melt index=12; a residue to the extraction with heptane=97.5%, an ash content=75 ppm, an apparent density=0.51, and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was thoroughly homogeneous, as resulted from the absence of crumbs and deposits on the mixer walls.

Photographic enlargements of the mix revealed a uniform distribution of the pigment on the surfaces of the polymer granules unlike what happens with a polymer mix not containing polyoxyethylene-dodecylamine, in which the dyeing yield is by far lower.

0.030 kg of concentrated mix were diluted by mixing in a 10-liter slow mixer of the Battagion-type with 2.970 kg of polypropylene flakes to obtain a pigment concentration of 0.1%.

To check the influence of the mixing agent on the homogeneous distribution of the pigment and on its intensity, as well as to check the influence thereof on the colour stability to thermal degradation, small plates were prepared with the dilute mix. The 1-mm thick plates were prepared in a Carver press, by heating for 15 minutes to temperatures of 200°C, 240°C, 260°C, 280°C.

In all the samples the pigment remained fully stable to thermal degradation.

The dilute mix was directly fed to a melt spinning device. Spinning and successive stretching were carried out under the following operative conditions:

| | |
|---|---|
| —temperature of the head | 230°C |
| —temperature of the spinneret | 230°C |
| —temperature of the screw | 240°C |
| —spinneret type (number of holes/diameter/height) | 40/0.8/4 |
| —max. pressure | 27 kg/cm$^2$ |
| —winding speed | 400 m/min. |
| —stretching temperature | 130°C |
| —stretching medium | vapour |
| —stretching ratio | 1:3.4 |

The fibres so obtained exhibited a uniform pigmentation and the following characteristics:

| | |
|---|---|
| —count | 17 dtex |
| —tenacity | 3.2 g/dtex |
| —elongation | 67% |

Example 8

Into a Henschell-type mixer having a capacity of 10 liters, the following was introduced:

| | |
|---|---|
| —polypropylene in flakes | 1.780 kg |
| —N,N-bis-(polyoxyethylene)-n . dodecylamine | 0.020 kg |
| —thermostable Red BRA (C.I., second edition (1956), Pigment Red 144) | 0.200 kg. |

Mixing was conducted at 25°C for 5 minutes. The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%

177—250 μm= 8.5%
149—177 μm= 3.2%
74—149 μm= 5.5%
<74 μm= 0 %

The concentrated mix was completely uniform, as resulted from the absence of crumbs and deposits on the mixer walls. Photographic enlargements of the mix revealed a uniform distribution of the pigement on the surfaces of the polymer granules unlike what happens with a polymer mix not containing polyoxyethylene-dodecylamine, in which the dyeing yield is much lower.

0.030 kg of concentrated mix were diluted by mixing in a slow mixer, Battagion-type, having a 10-liter capacity, with 2.970 kg of polypropylene flakes, to obtain a pigment concentration of 0.1%.

To check the influence of the mixing agent on the homogeneous distribution of the pigment and on its intensity, and also to check the influence thereof on the colour stability the thermal degradation, plates were prepared with the dilute mix. The 1-mm thick plates were prepared in a Carver press, by heating for 15 minutes to temperatures of 200°C, 240°C, 260°C, 280°C.

In all the samples the pigment appeared fully stable to thermal decompositions.

Example 9

Into a Henschell mixer having a 10-liter capacity.

| | |
|---|---|
| —polypropylene in flakes | 1.340 kg |
| —N,N-bis(polyoxyethylene)-n . dodecylamine | 0.060 kg |
| —"Graftolo" oxide Red EOR | 0.600 kg |

were introduced.

Mixing was effected at 25°C for 5 minutes.

The employed polypropylene in flakes exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the pigment on the surface of the polymer granules unlike what happens with a polymer mix not containing polyoxyethylene-dodecylamine, in which the dyeing yield is much lower.

0.010 kg of concentrated mix were diluted by mixing in a slow mixer. Battagion-type, having a 10-liter capacity, with 2.990 kg of polypropylene flakes, to obtain a pigment concentration of 0.1%.

To check the influence of the mixing agent on the homogeneous distribution of the pigment and of its intensity, as well as to check the influence thereof on the colour stability to thermal degradation, plates were prepared with the dilute mix. The 1-mm thick plates were prepared in a Carver press, by heating for 15 minutes to temperatures of 200°C, 240°C, 260°C, 280°C.

In all the samples the pigment remained perfectly stable to thermal degration.

Example 10

A Henschell-type mixer having a 10-liter capacity was charged with:

| | |
|---|---|
| —polypropylene in flakes | 1.780 kg |
| —N;N-bis-(polyoxyethylene)-n . octadecylamine (containing about 20 units ($CH_2CH_2O$)) | 0.020 kg |
| —thermostable Red BRA (C.I., second edition (1956), Pigment Red 144) | 0.200 kg |

Mixing was carried out at 25°C for 5 minutes.

The polypropylene in flakes utilized exhibited a melt index=12, a residue to the extraction with heptane=97.5%, an ash content=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 % |

The concentrated mix was fully homogeneous, as resulted from the absence of crumbs and deposits on the mixer walls, and from the uniform pigment coating on the polypropylene flakes.

Example 11

Into a Henschell-type mixer, having a 10-liter capacity,

| | |
|---|---|
| —polypropylene in flakes | 1.780 kg |
| —N,N-bis-(polyoxyethylene)-n . dodecylamine | 0.020 kg |
| —azodicarbonamide | 0.200 kg |

were introduced.

Mixing was conducted at 25°C for 5 minutes.

The employed polypropylene in flakes exhibited a melt index=12, a residue to the extraction with heptane=97.5%, an ash content=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 % |

The concentrated mix was completely homogeneous, as resulted from the absence of crumbs and deposits on the mixer walls.

Enlarged photographs of the mix revealed a uniform distribution of the blowing agent on the surfaces of the polymer granules, unlike what happens with a polymer mix not containing polyoxyethylene-dodecylamine.

0.300 kg of a concentrated mix were diluted by mixing in a Battagion slow mixer having a 10-liter capacity, with 2.700 kg of polypropylene flakes, to obtain a concentration of the blowing agent of 1%.

To check the influence of the mixing agent on the homogeneous distribution of the blowing agent and on the trend of its thermal degradation, plates were prepared with the dilute mix. 2-mm thick plates were prepared in a Carver press by heating for 5 minutes to a temperature of 240°C. The dimension and the distribution of the pores formed during the thermal degradation of the blowing agent, detected by photographic enlargements, proved a homogeneous distribution on the blowing agent in the polymer containing polyoxyethylene-dodecylamine, unlike what happens in the sample without mixing agent.

Example 12

Into a 10-liter mixer, Henschell-type, the following was introduced:

| | |
|---|---|
| —polypropylene in flakes | 1.780 kg |
| —N,N-bis-(polyoxyethylene)-n . -dodecylamine | 0.020 kg |
| —pentaerythritoltetra-3 (3,5-di-tert . butyl-4-hydroxyphenyl)propionate | 0.200 kg |

Mixing was carried out at 25°C for 5 minutes.

The polypropylene in flakes utilized exhibited a melt index=12, a residue to the extraction with heptane=97.5%, an ash content=75 ppm, an apparent density=0.51, and the following granulometric distribution:

| | |
|---|---|
| >840 μm= | 4.4% |
| 420—840 μm= | 23.0% |
| 250—420 μm= | 55.4% |
| 177—250 μm= | 8.5% |
| 149—177 μm= | 3.2% |
| 74—149 μm= | 5.5% |
| <74 μm= | 0 % |

The concentrated mix was thoroughly homogeneous, as resulted from the absence of crumbs and deposits on the mixer walls.

Enlarged photographs of the mix revealed a uniform distribution of the stabilizer on the surfaces of the polymer granules, unlike what occurs with a polymer mix not containing polyoxyethylene-dodecylamine.

Example 13

A 10-liter mixer, Henschell-type, was charged with:

| | |
|---|---|
| —polypropylene in flakes | 1.780 kg |
| —N,N-bis-(polyoxyethylene)-n . dodecylamine | 0.020 kg |
| —Ni-2,2′-thiobis(4-tert . octyl)-phenolate-n . butylamine | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the stabilizer on the surfaces of the polymer granules, unlike what happens with a polymer mix not containing polyoxyethylene-dodecylamine.

Example 14

Into a Henschell-type mixer having a 10-liter capacity, the following was introduced:

| | |
|---|---|
| —polypropylene in flakes | 1.780 kg |
| —N,N-bis(polyoxyethylene)n . dodecylamine | 0.020 kg |
| —2-tert . butyl-2-[4-hydroxy-3,3,5,5-tetramethylbenzyl]malonate of 2,2,6,6-tetramethyl-4-piperidyl | 0.200 kg |

Mixing was effected at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was thoroughly homogeneous, as resulted from the absence of crumbs and deposits on the mixer walls.

Enlarged photographs of the mix showed a uniform distribution of the stabilizer on the surface of the polymer granules, unlike what occurs with a polymer mix not containing polyoxyethylene-dodecylamine.

Example 15

Into a Henschell-type mixer having a 10-liter capacity, the following was introduced:

| | |
|---|---|
| —polypropylene in flakes | 1.780 kg |
| —ethylene glycol monolaurate | 0.020 kg |
| —pentaerythritoltetra-3-(3,5-di-tert . butyl-4-hydroxyphenyl)-propionate | 0.200 kg |

Mixing was effected at 25°C for 5 minutes.

The polypropylene in flakes employed exhibited a melt index=12, a residue to the extraction with heptane=97.5%, an ash content=75 ppm, an apparent density=0.51, and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the stabilizers on the surfaces of the polymer granules, unlike what happens with a polymer mix not containing ethylene glycol monolaurate.

Example 16

A Henschell-type 10-liter mixer charged with:

| | |
|---|---|
| —polypropylene in flakes | 1.780 kg |
| —glycerine monostearate | 0.020 kg |
| —pentaerythritoltetra-3(3,5-di-tert. butyl-4-hydroxyphenyl-propionate) | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the stabilizers on the surfaces of the polymer granules, unlike what happens with a polymer mix not containing glycerine monostearate.

Example 17

A 10-liter mixer, Henschell type, was charged with:

| | |
|---|---|
| —polypropylene in flakes | 1.780 kg |
| —ethylene glycol monolaurate | 0.020 kg |
| —Ni-2,2′-thiobis(4-tert. octyl)phenolate-n. butylamine | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the stabilizers on the surfaces of the polymer granules, unlike what happens with a polymer mix not containing ethylene glycol-monolaurate.

Example 18

Into a Henschell-type mixer having a 10-liter capacity, the following was introduced:

| | |
|---|---|
| —polypropylene in flakes | 1.780 kg |
| —glycerine monostearate | 0.020 kg |
| —Ni-2,2′-thiobis(4-tert. octyl)-phenolate-n. butylamine | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution.

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the stabilizers on the surfaces of the polymer granules, unlike what happens with a polymer mix not containing glycerine monostearate.

Example 19

Into a 10-liter mixer, Henschell-type, the following was introduced:

| | |
|---|---|
| —polypropylene in flakes | 1.780 kg |
| —glycerine monostearate | 0.020 kg |
| —azodicarbonamide | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the blowing agent on the surfaces of the polymer granules, unlike what happens with a polymer mix not containing glycerine monostearate.

0.300 kg of concentrated mix was diluted, by mixing in a 10-liter slow mixer, Battagion-type, with 2.700 kg of polypropylene flakes, to obtain a blowing agent concentration of 1%.

To check the influence of the mixing agent on the homogeneous distribution of the blowing agent and on its thermal degradation, small plates were prepared with the dilute mix.

The 2-mm thick plates were prepared in a Carver press by heating for 5 minutes to a temperature of 240°C. Dimensions and distribution of the pores formed during the thermal decomposition of the blowing agent, detected by photographic enlargements, showed a homogeneous distribution of the blowing agent in the polymer containing polyoxyethylene-dodecylamine, unlike what occurs in the sample not containing mixing agent.

Example 20

Into a 10-liter mixer, Henschell type, the following was introduced:

| | |
|---|---|
| —polypropylene in flakes | 1.780 kg |
| —glycerine monostearate | 0.020 kg |
| —"Graftolo" Yellow RCL (C.I., second edition (1956), Pigment Yellow 83) | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls.

Enlarged photographs of the mix revealed a uniform distribution of the pigment on the surfaces of the polymer granules, unlike what happens with a polymer mix not containing glycerine monostearate, in which the dyeing yield is much lower.

0.030 kg of concentrated mix were diluted by mixing in a 10-liter slow mixer, Battagion type, with 2.970 kg of polypropylene flakes to obtain a pigment concentration of 0.1%.

To check the influence of the mixing agent on the homogeneous distribution of the pigment and on the intensity thereof, besides to check its influence on the colour stability to thermal degration, small plates were prepared with the dilute mix. The 1-mm thick plates were prepared in a Carver press by heating for 15 minutes to temperature of 200°C, 240°C, 260°C, 280°C.

In all the samples the pigment resulted thoroughly stable to thermal decomposition.

The dilute mixture was directly fed to a melt spinning device.

Spinning and successive stretching were effected under the operating conditions reported hereinbelow:

| | |
|---|---|
| —temperature of the head | 230°C |
| —temperature of the spinneret | 230°C |
| —temperature of the screw | 240°C |
| —spinneret type (number of holes/diameter/height) | 40/0.8/4 |
| —max. pressure | 32 kg/cm² |
| —winding speed | 400 m/min. |
| —stretching temperature | 130°C |
| —stretching medium | vapour |
| —stretching ratio | 1:3.2 |

The fibres obtained exhibited a uniform pigmentation and the following characteristics:

| | |
|---|---|
| —count | 17 dtex |
| —tenacity | 2.9 g/dtex |
| —elongation | 71% |

Example 21

Into a 10-liter mixer, Henschell-type, the following was introduced:

| | |
|---|---|
| —polypropylene in flakes | 1.340 kg |
| —ethylene glycol monolaurate | 0.060 kg |
| —"Graftolo" oxide Red EOR | 0.600 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—143 μm= 5.5%
<74 μm= 0 %

The concentrated mix was completely homogeneous, as resulted from the absence of crumbs and deposits in the mixer walls.

Enlarged photographs of the mix revealed a uniform distribution of the pigment on the surface of the polymer granules, unlike what happens with a polymer mix not containing ethylene glycol monolaurate, in which the dyeing yield was much lower.

Example 22

A 10-liter mixer, Henschell type, was charged with:

| | |
|---|---|
| —polypropylene in flakes | 1.780 kg |
| —n-dodecyl alcohol | 0.020 kg |
| —"Graftolo" Yellow RCL (C.I., second edition (1956), Pigment Yellow 83) | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.030 kg of concentrated mix were diluted by mixing in a 10-liter quick mix, Henschell-type, with 2.970 kg of polypropylene flakes, to obtain a pigment concentration of 0.1%. To check the influence of the mixing agent on the homogeneous distribution of the pigment and on its intensity, besides to check the influence on the colour stability to thermal degradation, small plates with the dilute mix were prepared. The 1 mm plates were prepared in a Carver press by heating for 15 minutes to temperature of 200°C, 240°C, 260°C, 280°C, and did not show any alterations.

Example 23

A 10-liter mix, Henschell-type, was charged with:

| | |
|---|---|
| —polypropylene in flakes | 1.340 kg |
| —n . dodecyl alcohol | 0.060 kg |
| —"Graftolo" oxide Red EOR | 0.600 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
>74 μm= 0 %

The concentrated mix was completely homogeneous, as resulted from the absence of crumbs and deposits on the mixer walls and from uniform pigment coating on the polypropylene flakes.

0.010 kg of concentrated mix were diluted by mixing in a 10-liter quick mixer, Henschell-type, with 2.990 kg of polypropylene flakes to obtain a pigment concentration of 0.1%.

To check the influence of the mixing agent on the homogeneous distribution of the pigment and on the intensity thereof, besides to check its influence on the colour stability to thermal degradation, small plates were prepared with the dilute mix. The 1-mm thick plates were prepared in a Carver press by heating for 15 minutes to temperature of 200°C, 240°C, 260°C, 280°C, and did not exhibit any alterations.

Example 24

A 10-liter mixer, Henschell-type, was charged with:

| | |
|---|---|
| —propylene in flakes | 1.780 kg |
| —lauric acid | 0.020 kg |
| —"Graftolo" Yellow RCL (C.I., second edition (1956), Pigment Yellow 83) | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.030 kg of concentrated mix was diluted by mixing in a 10-liter quick mixer, Henschell-type, with 2.970 kg of polypropylene flakes to obtain a pigment concentration of 0.1%. To check the influence of the mixing agent on the homogeneous distribution of the pigment and on the intensity thereof, besides to check its influence on the colour stability to thermal degradation, small plates were prepared with the dilute mix. The 1-mm thick plates were prepared in a Carver press by heating for 15 minutes to temperature of 200°C, 240°C, 260°C, 280°C and did not exhibit any alterations.

Example 25

Into a 10-liter mixer, Henschell-type, the following was introduced:

| | |
|---|---|
| —polypropylene in flakes | 1.340 kg |
| —sodium oleate | 0.060 kg |
| —"Graftolo" oxide Red EOR | 0.600 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.010 kg of concentrated mix were diluted by mixing in a 10-liter quick mixer, Henschell-type, with 2.990 kg of polypropylene flakes to obtain a pigment concentration of 0.1%.

To check the influence of the mixing agent on the homogeneous distribution of the pigment and on the intensity thereof, besides to check its influence on the colour stability to thermal degradation, small plates were prepared with the dilute mix. The 1-mm thick plates were prepared in a Carver press by heating for 15 minutes to temperature of 200°C, 240°C, 260°C, 280°C, and did not exhibit any alterations.

The dilute mixture was directly fed to a melt spinning device.

Spinning and successive stretching were effected under the operating conditions reported hereinbelow:

| | |
|---|---|
| —temperature of the head | 240°C |
| —temperature of the spinneret | 240°C |
| —temperature of the screw | 240°C |
| —spinneret type (number of holes/diameter/height) | 40/0.8/4 |
| —max. pressure | 32.7 kg/cm$^2$ |
| —winding speed | 400 m/min. |
| —stretching temperature | 130°C |
| —stretching medium | vapour |
| —stretching ratio | 1:3.4 |

The fibres obtained exhibited a uniform pigmentation and the following characteristics:

| | |
|---|---|
| —count | 17 dtex |
| —tenacity | 2.9 g/dtex |
| —elongation | 85% |

Example 26

Into a 10-liter mixer, Henschell-type, the following was introduced:

| | |
|---|---|
| —polypropylene in flakes | 1.780 kg |
| —n. octadecylamine | 0.020 kg |
| —"Graftolo" Yellow RCL (C.I., second edition (1956), Pigment Yellow 83) | 0.200 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.030 kg of concentrated mix were diluted by mixing in a 10-liter quick mixer, Henschell-type, with 2.970 kg of polypropylene flakes to obtain a pigment concentration of 0.1%.

To check the influence of the mixing agent on the homogeneous distribution of the pigment and on the intensity thereof, besides to check its influence on the colour stability to thermal degradation, small plates were prepared with the dilute mix. The 1-mm thick plates were prepared in a Carver press by heating for 15 minutes to temperature of 200°C, 240°C, 260°C, 280°C, and did not exhibit any alterations.

Example 27

A 10-liter mixer, Henschell-type, was charged with:

| | |
|---|---|
| —polypropylene in flakes | 1.340 kg |
| —n. octadecylamine | 0.060 kg |
| —"Graftolo" oxide Red EOR | 0.600 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%

177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.010 kg of concentrated mix were diluted by mixing in a 10-liter quick mixer, Henschell-type, with 2.990 kg of polypropylene flakes to obtain a pigment concentration of 0.1%.

To check the influence of the mixing agent on the homogeneous distribution of the pigment and on the intensity thereof, besides to check its influence on the colour stability to thermal degradation, small plates were prepared with the dilute mix. The 1-mm thick plates were prepared in a Carver press by heating for 15 minutes to temperature of 200°C, 240°C, 260°C, 280°C, and did not exhibit any alterations.

Example 28

Into a 10-liter mixer, Henschell-type, the following was introduced:

| | |
|---|---|
| —polypropylene in flakes | 1.780 kg |
| —polyoxyethylene alcohol $C_{12}H_{25}O-(CH_2-CH_2O)_{28}H$ | 0.020 kg |
| —"Graftolo" Yellow RCL (C.I., second edition (1956), Pigment Yellow 83) | 0.200 kg |

Mixing was carried out at 15°C for 5 minutes.

The polypropylene in flakes employed a melt index=12, a residue to the extraction with heptane=97.5%, an ash content=75 ppm, an apparent density=0.51 and the following granulometric distribution:

>840 μm= 4.4%
420—840 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.030 kg of concentrated mix were diluted by mixing in a 10-liter quick mixer, Henschell-type, with 2.970 kg of polypropylene flakes to obtain a pigment concentration of 0.1%.

To check the influence of the mixing agent on the homogeneous distribution of the pigment and on the intensity thereof, besides to check its influence on the colour stability to thermal degradation, small plates were prepared with the dilute mix. The 1-mm thick were prepared in a Carver press by heating for 15 minutes to temperature of 200°C, 240°C, 260°C, 280°C, and did not exhibit any alterations.

Example 29

A 10-liter mixer, Henschell-type, was charged with:

| | |
|---|---|
| —polypropylene in flakes | 1.340 kg |
| —polyoxyethylene alcohol $C_{12}H_{25}O-(CH_2-CH_2O)_{18}H$ | 0.600 kg |
| —"Graftolo" oxide Red EOR | 0.600 kg |

Mixing was carried out at 25°C for 5 minutes.

The polypropylene in flakes employed exhibited a melt index=12, a residue to the extraction with heptane=97.5%, an ash content=75 ppm, an apparent density=0.51 and the following granulometric distribution:

>840 μm= 4.4%
420—240 μm=23.0%
250—420 μm=55.4%
177—250 μm= 8.5%
149—177 μm= 3.2%
74—149 μm= 5.5%
<74 μm= 0 %

The concentrated mix was completely homogeneous, as resulted from the absence of crumbs and deposits on the mixer walls and from the uniform pigment coating on the polypropylene flakes.

0.010 kg of concentrated mix were diluted by mixing in a 10-liter quick mixer. Henschell-type, with 2.990 kg of polypropylene flakes to obtain a pigment concentration of 0.1%.

To check the influence of the mixing agent on the homogeneous distribution of the pigment and on the intensity thereof, besides to check its influence on the colour stability to thermal degradation, small plates were prepared with the dilute mix. The 1-mm thick plates were prepared in a Carver press by heating for 15 minutes to temperature of 200°C, 240°C, 260°C, 280°C, and did not exhibit any alterations.

**Claims**

1. A process for preparing homogeneous compositions containing olefinic polymers in flake form and additives, suitable for direct transformation into manufactured articles without granulation, characterized in that the polymer is mixed in the solid state with the additive in presence of a third component, acting as a mixing agent, which is employed as such or in solution in hydrocarbon solvents, in amounts of 0.01—5% by weight referred to the total of the mix, selected from the class of liquid or solid paraffinic compounds having a linear or branched chain containing up to 500 carbon atoms, consisting of a substance selected from amongst a mixture of liquid paraffinic hydrocarbons, paraffin waxes, oligomers of ethylene or of propylene or low molecular weight polypropylene or a compound containing one or more polar groups as substituents comprised in the general formula

R—X

wherein R is a linear or branched alkyl radical having 12 to 30 carbon atoms,
X may be:

a) —OH
b) —COOH or corresponding salts of alkali metals
c) —NR′R″ in which R′ and R″, which may be the same or different, are hydrogen or alkyl having 1 to 12 carbon atoms
d) $—O(CH_2CH_2O)_m—H$, $—O[CH(CH_3)CH_2O]_m—H$ in which m=1—50,
e) 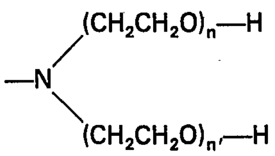 , 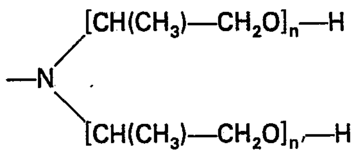

in which n and n′ which may be the same or different, are comprised from 0 to 50, at least one being different from 0
f) —OCOR‴ in which R‴ is an alkyl containing hydroxyl groups, in particular it can be a radical deriving from polyols.

2. A process according to claim 1, in which use is made of a mixing agent comprised in general formula R—X, in which R is a linear or ramified alkyl having 12 to 18 carbon atoms.

3. A process according to claim 1, in which use is made of a mixing agent of the general formula R—X, in which X has the meaning of d), wherein n=4—20.

4. A process according to claim 1, in which use is made of a mixing agent of the general formula R—X, in which X has the meaning of f), wherein R‴ is a radical derived from ethylene glycol, glycerine or pentaerythritol.

5. Additioned polyolefinic compositions, consisting of polyolefinic flakes, additives and a third component, acting as a mixing agent, selected from the class of the paraffinic compounds indicated in any of claims 1 to 4.

**Patentansprüche**

1. Verfahren zur Herstellung von olefinische Polymere in Flockenform und Additive enthaltenden homogenen Zusammensetzungen, die für die direkte Überführung in Produktionserzeugnisse ohne Granulierung geeignet sind, dadurch gekennzeichnet, daß man das Polymere in festem Zustand mit dem Additiv in Gegenwart einer dritten als Mischmittel wirkenden Komponente mischt, die als solche oder in Lösung in Kohlenwasserstofflösungsmitteln in Mengen von 0,01 bis 5 Gew.-%, bezogen auf die Gesamtmenge der Mischung, verwendet wird und ausgewählt wird unter flüssigen oder festen paraffinischen Verbindungen mit linearer oder verzweigter Kette mit bis zu 500 Kohlenstoffatomen, bestehend

aus einer Substanz, ausgewählt unter einer Mischung von flüssigen paraffinischen Kohlenwasserstoffen, Paraffinwachsen, Oligomeren des Äthylens oder Propylens oder Polypropylen mit niedrigem Molekulargewicht oder einer Verbindung mit einer oder mehreren polaren Gruppen als Substituenten der allgemeinen Formel

$$R—X$$

worin R einen linearen oder verzweigten Alkylrest mit 12 bis 30 Kohlenstoffatomen bedeutet, X sein kann:

a) —OH
b) —COOH oder die entsprechenden Alkalimetallsalze,
c) —NR′R″, worin R′ und R″, die gleich oder verschieden sein können, Wasserstoff oder Alkyl mit 1 bis 12 Kohlenstoffatomen bedeuten,
d) $—O(CH_2CH_2O)_n—H$, $—O[CH(CH_3)CH_2O]_m—H$, worin m=1—50

e) 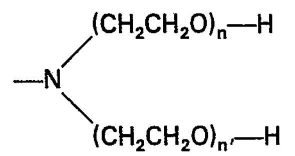 , 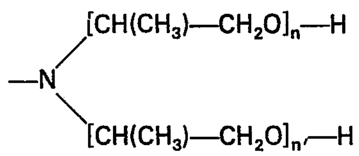

worin n und n′, die gleich oder verschieden sein können, zwischen 0 und 50 liegen, wobei zumindest eines von 0 verschieden ist,
f) —OCOR‴, worin R‴ ein Hydroxylgruppen-enthaltendes Alkyl ist und insbesondere ein sich von Polyolen ableitender Rest sein kann.

2. Verfahren gemäß Anspruch 1, dadurch gekennzeichnet, daß man ein Mischmittel der allgemeinen Formel R—X verwendet, worin R einen linearen oder verzweigten Alkylrest mit 12 bis 18 Kohlenstoffatomen darstellt.

3. Verfahren gemäß Anspruch 1, dadurch gekennzeichnet, daß man ein Mischmittel der allgemeinen Formel R—X verwendet, worin X die Bedeutung von d) besitzt, worin n=4—20.

4. Verfahren gemäß Anspruch 1, dadurch gekennzeichnet, daß man ein Mischmittel der allgemeinen Formel R—X verwendet, worin X die Bedeutung von f) besitzt, worin R‴ einen sich von Äthylenglykol, Glycerin oder Pentaerythrit ableitenden Rest darstellt.

5. Mit Zusätzen versetzte Polyolefinzusammensetzungen, bestehend aus Polyolefinflocken, Additiven und einer dritten als Mischmittel wirkenden Komponente, ausgewählt unter den in einem der Ansprüche 1 bis 4 angegebenen paraffinischen Verbindungen.

**Revendications**

1. Procédé de préparation de compositions homogènes contenant des polymères oléfiniques sous forme de flocons et des additifs convenant à la transformation directe en articles manufacturés sans granulation, caractérisé en ce que le polymère est mélangé à l'état solide avec l'additif en présence d'un troisième composant, agissant comme agent de mélange qui est employé tel quel ou en solution dans des solvants hydrocarbonés en quantité de 0,01 à 5% en poids par rapport au total du mélange, choisi parmi la classe des composés paraffiniques liquides ou solides possédant une chaîne linéaire ou ramifiée contenant jusqu'à 500 atomes de carbone consistant en une substance choisie parmi un mélange d'hydrocarbures paraffiniques liquides, les cires de paraffine, les oligomères d'éthylène ou de propylène ou de polypropylène à bas poids moléculaire ou un composé, contenant un ou plusieurs groupements polaires comme substituants, compris dans la formule générale:

$$R—X$$

dans laquelle:
R est un radical alkyle, linéaire ou ramifié, possédant de 12 à 30 atomes de carbone;
X peut être:

a). OH;
b). COOH ou des sels correspondants de métaux alcalins;
c). NR′R″ dans lequel R′ et R″ peuvent être égaux ou différents et représentent un hydrogène ou un groupement alkyle possédant de 1 à 12 atomes de carbone;
d). $O(CH_2CH_2O)_m—H$, $—O\{CH(CH_3)CH_2O\}_m—H$ avec m=1 à 50;

e). 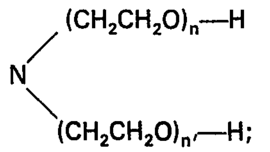 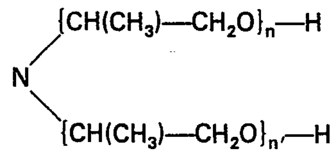

dans lesquels

n et n' qui peuvent être égaux ou différents, sont compris entre 0 et 50, l'un d'entre eux au moins étant différent de 0;

f). OCOR''' dans lequel R''' est un alkyle contenant des groupements hydroxyles pouvant en particulier être un radical dérivé des polyols.

2. Procédé suivant la revendication 1, caractérisé en ce que l'on utilise un agent de mélange compris dans la formule générale R—X, dans laquelle R est un groupement alkyle linéaire ou ramifié possédant de 12 à 18 atomes de carbone.

3. Procédé suivant la revendication 1, caractérisé en ce que l'on utilise un agent de mélange de formule générale R—X, dans laquelle X a la signification de d)., et n=de 4 à 20.

4. Procédé suivant la revendication 1, caractérisé en ce que l'on utilise un agent de mélange de la formule générale R—X, dans laquelle X a la signification de f)., et R''' est un radical dérivé de: éthylène glycol, glycérine ou pentaérythritol.

5. Compositions de polyoléfiniques additivées constituées de flocons polyoléfiniques, d'additifs et d'un troisième composant agissant comme agent de mélange choisi dans la classe des composés paraffiniques indiqués dans l'une quelconque des revendications 1 à 4.